# EUROPÄISCHE PATENTSCHRIFT

(11) **EP 3 887 856 B1**
(45) Veröffentlichungstag und Bekanntmachung des Hinweises auf die Patenterteilung: **13.11.2024**
(21) Anmeldenummer: 19816506.0
(22) Anmeldetag: 28.11.2019
(51) Int. Cl.: H04N 23/60, G01S 13/86

(54) **VERFAHREN FÜR DIE DISTANZMESSUNG ZUR FOKUSSIERUNG ZUMINDEST EINES KAMERAOBJEKTIVS**
METHOD FOR MEASURING DISTANCE IN ORDER TO FOCUS AT LEAST ONE CAMERA LENS
PROCÉDÉ POUR LA MESURE DE DISTANCE SERVANT À LA MISE AU POINT D'AU MOINS UN OBJECTIF DE CAMÉRA

(30) Priorität: 30.11.2018 AT 510652018
(43) Veröffentlichungstag der Anmeldung: 06.10.2021
(73) Patentinhaber: qinematiq GmbH, 1060 Wien (AT)
(72) Erfinder: WAITZ, Martin, 1060 WIEN (AT)
(74) Vertreter: Babeluk, Michael
(86) Internationale Anmeldenummer: PCT/AT2019/060403
(87) Internationale Veröffentlichungsnummer: WO 2020/107048

(56) Entgegenhaltungen:
- US-A1- 2004 046 938
- US-A1- 2017 085 771

## Beschreibung

Die Erfindung betrifft ein Verfahren für die Distanzmessung zur Fokussierung zumindest eines Kameraobjektivs einer Kamera gemäß dem Oberbegriff von Patentanspruch 1.

Sie betrifft auch eine Distanzmesseinheit zur Messung einer Distanz zwischen einer Kamera und einem Objekt zur Fokussierung zumindest eines Kameraobjektivs einer Kamera auf ein Objekt gemäß dem Oberbegriff von Patentanspruch 11.

In der GB 1162910 A1 wird eine Kamera beschrieben, welche eine Ultraschallmesseinheit aufweist, um die Distanz zu einem Objekt zu messen. Als Objekte kommen alle Objekte in Frage, auf die der Fokus oder ein Fokus der Kamera gerichtet werden soll. In der Regel handelt es sich dabei um Videokameras, also Kameras zur Aufnahme eines Films. Meist sind diese Objekte sich bewegende Menschen oder Fahrzeuge, weswegen die automatische Fokussierung abhängig von der sich veränderten Entfernung oder Distanz eine wesentliche Erleichterung für den Bediener und eine Verbesserung der Aufzeichnung bedeutet.

Seit Jahrzehnten werden am Filmset fast ausschließlich Ultraschallmesseinheiten in der Distanzbestimmung zwischen Kamera und Objekt eingesetzt. Das Messsystem beruht darauf, dass ein Sensor an der Kamera ein Ultraschall-Signal aussendet, welches am Objekt reflektiert wird. Das zurücklaufende Signal wird am Sensor wieder empfangen. Aus der Laufzeit wird die Distanz bestimmt. Ein Ultraschall-Messgerät arbeitet meist ohne Transponder (passiven oder aktivem Reflektor) am Motiv. Die Entfernungsmessung mit Hilfe von Ultraschall hat folgende Vorteile:
Ultraschall ist relativ genau, die Genauigkeit liegt im unteren Zentimeterbereich. Ein Ultraschall-Messgerät misst im Gegensatz zu einem Lasermessgerät nicht in einem Messpunkt, sondern in einem Messkegel. Dadurch findet eine natürliche Mittelung der Messung statt. Das Ziel ist leichter anzuvisieren, bzw. der Messbereich ist geglättet.

Ultraschall ist unsichtbar, augensicher und stört die Schauspieler nicht.

Dieser Messkegel ist aber gleichzeitig auch ein großer Nachteil der Ultraschall Technologie. Je weiter das zu messende Motiv von der Kamera entfernt ist, umso grösser wird der Bereich, welcher vom Kegel erfasst wird. Oft wird es schwierig bei Entfernungen über 4 m das Objekt richtig zu erfassen. Nicht nur das Gesicht wäre im Messkegel, sondern auch schon der Hals oder die Brust einer Person. Bei solchen Ausführungsformen ist bei Entfernungen von über 8 m eine halbwegs genaue Messung praktisch unmöglich, da der Messkegel nicht nur die Person erfasst, sondern auch schon benachbarte Objekte.

Aus der US 4534629 und der DE 29701668 U1 ist bekannt, dass ein Mikrowellensender an einer Kamera montiert werden kann. Am Motiv befindet sich ein Reflektor (Transponder, Tag), welcher die ausgesendete Welle reflektiert. Aus der Laufzeitmessung, Frequenzmessung bzw. Bestimmung der Frequenzverschiebung oder Messung der Feldstärke kann die Entfernung des Motivs zur Kamera ermittelt werden. Mit dieser Entfernungsmessung kann eine Filmkamera fokussiert werden. Jedoch ist die Distanzmessung für die Anwendung unzureichend genau. Insbesondere bei geringeren Distanzen sind diese Ungenauigkeiten besonders störend. Außerdem ist die Messmethode störanfällig, da bei Bewegung eines Körpers zwischen Objekt und Kamera Fehlmessungen entstehen können. Steht eine Person zwischen Sender und Reflektor, kommt es zu starken Fehlmessungen durch die Mehrwegausbreitung oder Abschattung der Mikrowelle. Auch Körperteile, wie die bewegte Hand, führen zu Fehlmessungen, wenn solche Transponder am Körper getragen werden. Der menschliche Körper selbst ist ein leitfähiges System und führt bei Bewegungen zu Verfälschungen in der Wellenausbreitung. Dies macht es nur wenig zuverlässig, weil die Messwerte oft springen.

Anhand der physikalischen Gegebenheiten lassen sich nur bedingte Genauigkeiten in der Bestimmung der Distanz aus der Wellenausbreitung errechnen. In der Mikrowellentechnik beschränkt die zur Verfügung stehende Bandbreite die Genauigkeit in der Distanzbestimmung. Bandbreite und Frequenz können zwar theoretisch gesteigert werden, praktisch unterliegt das Absenden von Mikrowellen aber weltweit unterschiedlichen regulativen Beschränkungen und Normen.

Auch ist seit vielen Jahren bekannt mit korrespondierenden Ultraschallsensoren Entfernungen zu messen. Eine Methode ist, dass von einem mobilen Transponder ein Mikrowellensignal und gleichzeitig ein Ultraschallsignal ausgesendet werden. Der Empfänger empfängt beide Signale und kann aus der Zeitdifferenz die Entfernung bestimmen. Aber auch hier kommt es wegen der Mehrfeldausbreitung und Abschattung der Ultraschallwelle zu Fehlmessungen.

Benachbarte Mikrowellen- oder Ultraschallsysteme können sich in der Distanzmessung durch Interferenzen stören. Solche Störungen machen sich als Sprünge in der Distanzmessung bemerkbar.

Mit Hilfe eines passiven Radarmessgeräts lassen sich ebenfalls Entfernungen zwischen dem Messgerät und einem Motiv messen, ohne dass am Motiv ein Reflektor angebracht wäre. Ähnlich wie Ultraschall misst ein Radarmessgerät in einem Messkegel und verursacht damit die gleichen Probleme wie mit den anderen Messmethoden. Ein Anvisieren des Motivs bei großen Entfernungen wird schwierig bis unmöglich.

Generell ist das Anvisieren des Objekts ein großes Problem bei der Distanzbestimmung von Objekten am Filmset. Lasermessgeräte sind sehr präzise, schnell und genau, messen aber nur in einem Punkt, wobei eine Visualisierung des Messpunkts am Filmset nicht möglich ist. Wird mit einem Lasermessgerät im Gesicht einer Person gemessen, so ist nicht ersichtlich, ob der Messpunkt auf dem Kinn oder schon am Hals der Person ist. In der zu bestimmenden Distanz kann sich dadurch aber schon ein beträchtlicher Unterschied ergeben.

Diesen Nachteil einer punktförmigen Messung bei Lasermessgeräten würde sich durch LIDAR-Sensoren umgehen lassen. LIDAR Sensoren messen nicht in einem Messkegel oder Messpunkt, sondern messen entlang eines Kreissegments von mehreren Grad. Dadurch wird der Nachteil einer punktförmigen Messung umgangen. Im Gegensatz zum Messkegel der Ultraschallmessung wird der Bereich aber auch gut eingeschränkt. Ein Anvisieren des Objekts wird dadurch erleichtert. Ab einer bestimmten Entfernung ist es aber auch mit Lidar-Messgeräten schwierig bis unmöglich, erwünschte Ziele von unerwünschten Objekten zu unterscheiden.

Die meisten LIDAR- Messgeräte basieren auf einer gepulsten Infrarot-Quelle, wobei durch mehrere räumlich versetzte Infrarot-Sensoren die rücklaufende Welle detektiert wird. Diese Messmethode ist nicht nur anfällig gegen Sonnenlicht, sondern führt auch bei unterschiedlichen Oberflächen des Objekts zu unterschiedlichen Messergebnissen.

Mit Ultraschall-, LIDAR-, Laser-, oder einer passiven Radar-Technologie lassen sich im unteren Entfernungsbereich Motive sehr gut und genau ausmessen. In größeren Entfernungen ist eine Ausrichtung des Messgeräts auf das Motiv aber schwierig und wird ohne spezielle Hilfsinstrumente unmöglich. Personen oder Gegenstände können das Motiv abschatten. In diesem Fall ist eine Messung mit diesen Messgeräten unmöglich. Es sind zwar Messverfahren zur Bestimmung größerer Distanzen möglich, jedoch sind diese zu ungenau, um im Nahbereich eine ausreichend exakte Fokussierung zu erlauben. Dem entsprechend werden diese nicht oder nur für spezielle Anwendungen verwendet.

Unabhängig von der Problematik der Ausrichtung, lassen sie die Ultraschall-, LIDAR, Laser-Distanzmesssysteme natürlich einfach abschatten. Zusätzlich lässt sich Ultraschall durch benachbarte Objekte einfach stören. Die Messmethode des Ultraschalls unterliegt sehr stark Umwelteinflüssen. Beispielsweise gehen Temperaturschwankungen sehr stark in die Messgenauigkeit ein. Die Schallwelle wird stark gedämpft und lässt in einer für die Anwendung brauchbaren Ausformung nur eine bedingte Reichweite zu. Auch ist die Ausbreitungsgeschwindigkeit der Schallwelle im Gegensatz zur Mikrowelle sehr langsam. Werden mehrere Systeme gleichzeitig in einem Raum verwendet, muss auf ein Übersprechen Rücksicht genommen werden.

Aus der US 2017/0085771 A ist eine Kamera bekannt, die neben einem Autofokus-System die Möglichkeit bietet, sekundäre Informationen zu berücksichtigen, wie etwa Radarbilder oder Daten von Beschleunigungssensoren.

Aufgabe der Erfindung ist damit, ein Verfahren und eine Distanzmesseinheit der genannten Art bereitzustellen, die eine verbesserte Fokussierung erlaubt.

Diese Aufgabe wird erfindungsgemäß durch die Merkmale der Patentansprüche 1 und 11 gelöst. Dabei ist zumindest ein weiteres Messsystem vorgesehen, das zumindest ein zur Messung geringer Distanzen geeignetes Nahdistanzmesssystem umfasst und die Distanz des Objektes zur Kamera misst und zumindest einen Nahmesswert als weiteren Messwert bereitstellt.

Somit wird nicht nur der Weitmesswert, sondern auch der weitere Messwert zur Fokussierung des Kameraobjektivs herangezogen. Erfindungsgemäß werden der weitere Messwert und der Weitmesswert dem Benutzer der Kamera angezeigt oder es wird aus dem weiteren Messwert und dem Weitmesswert über eine Übertragungsfunktion (100) ein Distanzparameter (F) berechnet. Dabei können der weitere Messwert und der Weitmesswert dem Benutzer der Kamera beispielsweise auf einem Display angezeigt werden, und der Benutzer abhängig von der Distanz entscheiden, welchen Messwert er für die Fokussierung heranzieht.

Sie wird auch dadurch gelöst, dass die Distanzmesseinheit zumindest ein weiteres Messsystem zur Messung eines weiteren Messwertes aufweist und eine Einstelleinheit mit dem weiteren Messsystem und mit dem Weitdistanzmesssystem verbunden ist.

Es werden also physikalisch unabhängigen Messmethoden verschiedene Messsysteme fusioniert, um eine verbesserte Distanzbestimmung für die Fokussierung eines Kameraobjektivs zu erreichen. Dadurch können die Nachteile der Messmethoden gegenseitig aufgehoben oder zumindest vermindert werden.

Eine Kombination der Messwerte ermöglicht eine Verbesserung der Distanzbestimmung, da die Vorteile der einzelnen Messmethoden kombiniert werden können, deren Schwächen aber gegenseitig ausgeglichen werden können. Dabei ist wichtig, dass die Messmethoden auf unterschiedliche physikalische Grundlagen beruhen, damit die Messfehler nicht korrelieren. Beispielsweise können auch so Fehlmesswerte von einem Messwert durch den anderen schwächer gewichtet oder gar identifiziert und gar nicht in die Berechnung miteingeschlossen werden.

Dabei werden vorzugsweise Mikrowellen, also elektromagnetische Wellen, verwendet, welche in einem Frequenzbereich von 1 GHz bis 122 GHz, besonders vorzugsweise von 1,5 GHz bis 10 GHz liegen. Ganz besonders vorzugsweise werden Mikrowellen in einem Wellenlängenbereich von 2 GHz bis 9 GHz verwendet.

Besonders vorteilhaft ist dabei, wenn der weitere Messwert ein Distanzmesswert ist. Damit ist gemeint, dass der weitere Messwert einen zur Distanz zum Objekt entsprechenden Messwert ausgibt.

Ein wichtiger Aspekt der Erfindung ist, dass das weitere Messsystem zumindest ein zur Messung geringer Distanzen geeignetes Nahdistanzmesssystem umfasst und die Distanz des Objektes zur Kamera misst und zumindest einen Nahmesswert als weiteren Messwert bereitstellt. Dem entsprechend kann auch vorgesehen sein, dass das weitere Messsystem zumindest ein zur Messung geringerer Distanzen geeignetes Nahdistanzmesssystem zur Messung zumindest eines Nahmesswertes als weiteren Messwert aufweist.

Es kann auch vorgesehen sein, dass der weitere Messwert ein Richtungswert, ein Geschwindigkeitswert oder ein Beschleunigungswert des Objekts ist.

In dieser Hinsicht ist besonders vorteilhaft, wenn das weitere Messsystem zumindest einen Beschleunigungssensor zumindest einer am Objekt angebrachten Markiereinrichtung umfasst und der Beschleunigungssensor zumindest einen Beschleunigungswert bereitstellt und dass der Beschleunigungswert zur Berechnung des weiteren Messwerts herangezogen wird. Dem entsprechend kann vorgesehen sein, dass zumindest eine Markiereinrichtung zur Befestigung am Objekt des weiteren Messsystems zumindest einen Beschleunigungssensor zur Messung zumindest eines Beschleunigungsmesswerts zur Berechnung des weiteren Messwerts aufweist.

Besonders vorteilhaft ist auch, wenn eine Recheneinheit der Einstelleinheit den Weitmesswert und den weiteren Messwert abhängig von einer Übertragungsfunktion gewichtet und daraus den Distanzparameter berechnet, oder dementsprechend wenn der weitere Messwert und der Weitmesswert abhängig von der Übertragungsfunktion bei der Berechnung des Distanzparameters unterschiedlich gewichtet werden.

Durch die Übertragungsfunktion wird bestimmt, in wie weit der weitere Messwert und der Weitmesswert in die Berechnung des Distanzparameters einbezogen werden. Der Distanzparameter ist dabei ein Parameter, der zur Fokussierung der Kameraoptik herangezogen werden kann, damit so die Optik auf ein Objekt eingestellt werden kann, sodass es scharf abgebildet wird. Dabei hat die Übertragungsfunktion zumindest einen Stellwert als Eingangswert, der bestimmt, ob, in welcher Form oder in welcher Intensität die Messwerte in die Berechnung Eingang finden.

Das Nahdistanzmesssystem ist dabei darauf optimiert, in näherer Distanz gute Distanzmesswerte zu liefern, während das Weitdistanzmesssystem dabei darauf optimiert ist, in größerer Distanz gute Distanzmesswerte zu liefern. Die schlechteren Messwerte des Nahdistanzmesssystems bei weiteren Distanzen können durch die Messwerte des Weitdistanzmesssystems ausgeglichen werden und anders herum.

Dies ermöglicht die Erweiterung des Distanzbereichs, indem eine ausreichend gute Distanzmessung und damit Fokussierung möglich ist. Es wird nur ein Distanzmesssystem gebraucht, das automatisch die korrekte Fokussierung auswählt und es müssen nicht mehrere Fokussiergeräte verwendet werden, welche abhängig von der Distanz vom Bediener der Kamera händisch aktiviert und deaktiviert werden müssen.

Wenn die Einstelleinheit dazu eingerichtet ist, aus dem weiteren Messwert und dem Weitmesswert über eine Übertragungsfunktion einen Distanzparameter zu berechnen, so können einfach und schnell aus den Messwerten ein Distanzparameter berechnet werden und dieser zur Einstellung des Kameraobjektivs verwendet werden.

Es kann vorgesehen sein, dass der weitere Messwert und der Weitmesswert abhängig von der Übertragungsfunktion bei der Berechnung des Distanzparameters unterschiedlich gewichtet werden. Dies hat den Vorteil, dass abhängig von der Übertragungsfunktion eine Entscheidung über die derzeitige Wichtigkeit jedes Messwertes für die Bestimmung des Distanzparameters festzulegen. Beispielsweise ist die Gewichtung des Weitmesswertes bei größerer Entfernung vorzugsweise höher als bei kürzerer Entfernung. Dem entsprechend kann die Gewichtung des Nahmesswerts vorzugsweise stärker sein, wenn das Objekt nahe der Kamera ist und schwächer wenn das Objekt weiter entfernt ist. In einem mittleren Entfernungsbereich kann beispielsweise eine langsame Verschiebung der Gewichtungen stattfinden oder auch eine abrupte.

Mit Gewichtung ist dabei gemeint, dass der Einfluss der Messwerte auf den Distanzparameter unterschiedlich gewählt wird. Dies kann im einfachsten Fall durch einen Gewichtungsmultiplikator geschehen, der mit dem Messwert multipliziert wird.

Um eine besonders einfache, aber dennoch genaue Berechnung des Distanzparameters zu ermöglichen, kann zur Berechnung des Distanzparameters der gewichtete weitere Messwert und der gewichtete Weitmesswert addiert werden. So können die Messwerte ohne viel Rechenaufwand verarbeitet werden. Alternativ kann auch ein Mittelwert aus den gewichteten Messwerten errechnet werden.

In einer bevorzugten Ausführungsform werden die Messwerte einem Kalman-Filter zugeführt, wobei die Rahmenbedingungen der einzelnen Messmethoden dem Modell vorgegeben werden. Der Erwartungswert hängt von der Technologie ab, welche die Messgüte bestimmt, ob der Distanzwert war oder falsch sein muss. Damit gibt es ein Gütekriterium, einen Gütefaktor und eine Übergabefunktion.

Es kann zusätzlich sein, dass der weitere Messwert unterhalb eines Schwellenstellwerts der Übertragungsfunktion durch die Übertragungsfunktion stärker gewichtet wird als der Weitmesswert und dass der weitere Messwert oberhalb des Schwellenstellwerts durch die Übertragungsfunktion schwächer gewichtet wird als der Weitmesswert. Dies ist besonders vorteilhaft, wenn der weitere Messwert in weiten Distanzen durchwegs schlechte Qualität und der Weitmesswert in nahen Distanzen durchwegs schlechte Qualität hat, wenn als Stellwert ein Distanzwert genommen wird.

Dabei ist die Distanz, in der ein Messsystem gut funktioniert, stark von der Art oder Technologie des Messsystems und der Art der Kamerafokussierung abhängig. Dem entsprechend ist die Gewichtung der Messwerte stark von den Eigenschaften der Messsysteme abhängig. Es kann der Nahmesswert zumindest bei Distanzen unter 4 m des Objekts stärker gewichtet werden als der Weitmesswert und der Weitmesswert zumindest bei Distanzen über 8 m stärker gewichtet werden als der Nahmesswert. Dies ist für viele gängige Nahdistanzmesssysteme und Weitdistanzmesssysteme vorteilhaft. Die Distanzen können aber abhängig von der Art der Messsysteme oder den derzeitigen Anforderungen, vorzugsweise durch den Benutzer der Kamera verändert werden.

Die Stellwerte können unterschiedlichst gewählt werden. Besonders einfach und schnell ist es, wenn der Stellwert der Übertragungsfunktion abhängig von zumindest dem weiteren Messwert, dem Weitmesswert oder beiden gemacht wird. Damit können die Ausgangswerte der Übertragungsfunktion schnell ermittelt werden. Als Stellwert kann auch die Kombination, beispielsweise der Mittelwert der Messwerte oder eines Teils der Messwerte dienen.

Besonders vorteilhaft ist, wenn zumindest ein Stellwert der Übertragungsfunktion vom Distanzparameter abhängig gemacht wird. Damit wird der bereits optimierte Wert, der der wahren Distanz zwischen Kamera und Objekt besonders nahe kommt, als Ausgangswert herangezogen. Dabei wird vorzugsweise der Distanzparameter, der in einem vorhergehenden Berechnungsschritt berechnet wurde, herangezogen. Am Beginn des Verfahrens, wenn noch kein Distanzparameter vorliegt, kann ein Einstiegswert wie ein Defaultwert, der letzte Distanzparameter bei der letzten Messung oder ein anderer Wert wie der Mittelwert der Messwerte oder nur ein Messwert herangezogen werden. Beim Durchführen von mehreren Zyklen der Distanzparameterbestimmung wird dann automatisch der Distanzparameter innerhalb kürzester Zeit an sein Optimum verschoben.

Alternativ kann zumindest ein Stellwert der Übertragungsfunktion von der zeitlichen Änderung des weiteren Messwerts, des Weitmesswert oder beiden abhängig gemacht werden. Insbesondere, wenn ein Wert wenig anfällig auf abrupte Sprünge ist, kann so eine Glättung herbeigeführt werden.

Zur besseren Handhabung und zur besseren Einstellung auf die derzeitigen Begebenheiten kann es vorteilhaft sein, wenn zumindest ein charakteristischer Parameter der Übertragungsfunktion für den Benutzer der Kamera einstellbar ist. So kann der Benutzer der Kamera veränderte Drehbedingungen, wie Aufnahmen im Inneren oder Aufnahmen außen einstellen und den Distanzparameter so optimieren. Als charakteristischer Parameter kann beispielsweise eine Steigung, eine Verschiebung einer Kurve, ein Verstärkungsfaktor oder ein charakteristischer Wert der Übertragungsfunktion sein.

Es kann auch vorgesehen sein, dass nur der eine Messwert in einem Entfernungsbereich und nur der andere Messwert in einem anderen Entfernungsbereich verwendet wird, wobei im Bereich zwischen den Entfernungsbereichen eine Übergabe zwischen den Messwerten stattfindet. Die Übergabe kann automatisch vorgenommen werden oder er wird vom Benutzer vorgegeben, ebenso wie der Bereich, wo die Übergabe beginnen und abgeschlossen sein soll. Die Übertragungsfunktion kann in diesem Bereich beispielsweise linear oder exponentiell sein.

Es ist aber nicht unbedingt notwendig, dass ein transponderbehaftetes Messsystem im Fernbereich zum Einsatz kommt und ein transponderloses im Nahbereich. Es kann auch umgekehrt sein. Beispielsweise kann die magnetische Feldstärke (=Amplitude) eines Sensors im Nahbereich unter 1 m sehr gut und genau gemessen werden. Das Nahdistanzmesssystem kann also mehrere verschiedene Messsysteme aufweisen, die eventuell für unterschiedliche Entfernungen benutzt werden. Es ist daher möglich in Bereichen unter 1 m eine Distanzmessung anhand der Feldstärke durchzuführen. Im Mittelbereich von 0,8 - 5 m wird mit Ultraschall gemessen und ab 5 m wird auf das Mikrowellenmesssystem gewechselt. Die Wahl, welche Technologie oder Technologien als Nahdistanzmesssystem und welche als Weitdistanzmesssystem verwendet werden, sollte abhängig davon gemacht werden in welchem Umfeld die Kamera verwendet wird oder in welchen Distanzbereichen sich das Objekt wahrscheinlich bewegen wird.

Im Nahbereich der Filmkamera kann sehr gut mit transponderlosen reflektierenden Messgeräten (wie Ultraschall, Laser, LIDAR, Radar ohne Reflektor) gemessen werden, da in nahen Distanzen zur Kamera das Anvisieren des Motivs sehr einfach möglich ist. Ultraschall- und LIDAR-Messgeräte messen im Messkegel oder Messsegment den nahesten Punkt in diesem Bereich, oder erlauben eine Mittelung der Messwerte in diesem Bereich, was meistens auch gewünscht ist.

Des Weiteren ist vorteilhaft, wenn das Nahdistanzmesssystem zumindest ein Ultraschallmesssystem, Radar-Messsystem, stereoskope Kameraanordnung, TOP-Kamera oder LIDAR-Messsystem umfasst oder das Nahdistanzmesssystem ein Ultraschallmesssystem, Radar-Messsystem oder LIDAR-Messsystem aufweist. Ultraschallmesssysteme sind bereits bekannt und eignen sich sehr gut im Nahbereich. Dabei nimmt ihre Ungenauigkeit und Fehleranfälligkeit mit steigender Entfernung zu, normalerweise sind deren Werte ab 8 m oder 10 m Entfernung zwischen Objekt und Ultraschallmesssystem nur mehr sehr schlecht. Dabei ist mit Ultraschallmesssystem ein Distanzmesssystem gemeint, das durch Ultraschallwellen die Distanz zum Objekt misst.

Vorzugsweise werden bei dem Radar-Messsystem Radarwellen im Wellenlängenbereich von 20 GHz bis 300 GHz verwendet.

Vorzugsweise werden bei dem Ultraschall-Messsystem Ultraschallwellen im Frequenzbereich von 1 kHz bis 1 GHz, vorzugsweise von 16 kHz bis 1 GHz verwendet. Es kann auch vorgesehen sein, dass das Nahdistanzmesssystem ein Feldstärkemesssystem aufweist. Dieses kann durch die Messung der Feldstärke die Distanz eines Objektes bestimmen.

Es kann auch vorgesehen sein, dass das Nahdistanzmesssystem zumindest ein LIDAR-Messsystem umfasst. Dabei wird ein pulsierender Infrarotstrahl ausgesendet und das zurückgestreutes Licht von räumlich versetzten Sensoren im Messsystem detektiert. So kann die Distanz zum zurückstreuenden Objekt gemessen werden.

Es kann auch vorgesehen sein, dass das Nahdistanzmesssystem zumindest ein Radar-Messsystem umfasst. Dabei wird eine modulierte Mikrowelle ausgesendet, welche am Objekt reflektiert wird. Aus der Veränderung der ausgesendeten zur Rücklaufenden Welle kann ein Entfernungswert berechnet werden.

In diesem Sinne kann vorgesehen sein, dass ein Ultraschallemitter des Ultraschallmesssystems im Bereich der Kamera Ultraschallwellen in zumindest eine Richtung aussendet und Reflexionen dieser Ultraschallwellen von einem Ultraschallsensor erfasst werden und dass eine Kalkulatoreinheit einen Nahmesswert des reflektierenden Objektes berechnet.

Wenn das Weitdistanzmesssystem zumindest ein Mikrowellenmesssystem umfasst oder das Weitdistanzmesssystem ein Mikrowellenmesssystem aufweist, so kann auf exakte und sichere Art und Weise ein Weitmesswert erstellt werden. Dabei ist mit Mikrowellenmesssystem ein Distanzmesssystem gemeint, dass die Distanz durch Mikrowellenstrahlung bestimmen kann.

In dieser Hinsicht kann vorgesehen sein, dass das Mikrowellenmesssystem über einen Mikrowellenemitter im Bereich der Kamera Mikrowellensignale aussendet und zumindest ein portabler Mikrowellenresponder zumindest einer am Objekt angebrachten Markiereinrichtung auf die Mikrowellensignale antwortet oder das Weitdistanzmesssystem eine portable Markiereinrichtung zur Befestigung am Objekt aufweist, welches vorzugsweise einen Mikrowellenresponder aufweist. Die Markiereinrichtung kann beispielsweise klein ausgeführt sein, und von einer Person in die Hosentasche gesteckt oder am Körper angebracht werden, wenn diese Person das zu fokussierende Objekt darstellt. Der meist an der Kamera direkt angebrachte Mikrowellenemitter sendet Mikrowellen aus, welche vom Mikrowellenresponder empfangen werden, welcher darauf reagiert und ein Antwortsignal in Form von Mikrowellen emittiert.

Als Mikrowellenresponder kann ein Reflektor (aktiv, oder passiv) verwendet werden. An der Kamera ist vorzugsweise eine Basisstation der Distanzmesseinheit angeordnet, welche eine elektromagnetische Welle aussendet und das Signal vom Transponder misst. Aus der Laufzeitmessung, der Zeit-, Frequenz-, Phasenverschiebung innerhalb der hin- und rücklaufenden Welle, innerhalb der Welleninformationen oder in Bezug zu einem Referenzsignal kann die Entfernung berechnet werden.

In einer idealen Ausformung besitzt die Mikrowelleneinheit an der Markiereinrichtung die Eigenschaft, Datensignale zur Basisstation zu übermitteln.

Vorzugsweise ist das Mikrowellensystem ein UWB- (ultra-wideband) oder ein auf Radartechnik aufbauendes Distanzmesssystem, wobei eine große zur Verfügung stehende Bandbreite auch eine große Messgenauigkeit entspricht.

Eine besondere Erhöhung der Genauigkeit kann dadurch erreicht werden, dass an dem zu fokussierenden Objekt mehrere Markiereinheiten angebracht werden, um mehrere Entfernungssignale zu erhalten, die gemittelt werden. Typischerweise ist das zu fokussierende Objekt eine Person, auf deren Gesicht oder Kopf scharf gestellt werden soll. Wenn nun beispielsweise auf beiden Schultern oder auf beiden Armen entsprechende Transponder angebracht werden, dann kann durch Mittelung der Entfernungssignale eine Scharfstellung auf die Körperachse der Person erzielt werden. Schon allein durch die Mittelung wird die Auswirkung allfälliger Störungen bei der Entfernungsbestimmung an einem Transponder entsprechend verringert.

Eine besonders große Steigerung der Messgenauigkeit kann erreicht werden, wenn zur Distanzbestimmung ein von den bisherigen Messmethoden weiteres physikalischen nicht korrelierendes Messsystem hinzugezogen wird.

Eine gute Korrektur von Messwerten kann erreicht werden, wenn zumindest ein Beschleunigungsmesswert zumindest eines Beschleunigungssensors der Markiereinrichtung zur Korrektur der Weitmesswertes herangezogen wird oder wenn die Markiereinrichtung zumindest einen Beschleunigungssensor aufweist. Beschleunigungssensoren reagieren sehr exakt auf momentane Änderungen in kurzen Zeitintervallen. Daher können die Messwerte träger Messsysteme durch den Beschleunigungsmesswert verbessert werden.

Vorteilhaft ist, wenn die Markiereinrichtung zumindest ein Trägheitsnavigationssystem mit zumindest dem Beschleunigungssensor und zumindest einem Drehratensensor aufweist.

Eine besonders große Steigerung der Genauigkeit kann jedoch dadurch erreicht werden, dass die Mittelung gewichtet ist, wobei die Gewichtung in Abhängigkeit von Signalen des jeweiligen Beschleunigungssensors bestimmt wird. Auf diese Weise kann dem Umstand Rechnung getragen werden, dass die Extrapolation bei Erkennung einer Störung grundsätzlich eine geringere Genauigkeit aufweist als die ungestörte Messung. Die Auswirkung dieser Ungenauigkeit auf das Endergebnis kann durch eine Verringerung des entsprechenden Gewichts bei der Mittelung erreicht werden.

Ein Beschleunigungssensor hat die Eigenschaft, dass durch eine doppelte Integration über die Zeit eine Wegänderung gemessen werden kann. Diese Wegmessung ist in einem hinreichend kurzen Zeitabstand sehr genau. Sie wird allerdings durch Drifts und Rauschen im Sensor auf Grund der Integration über die Zeit in einem längeren Messintervall sehr ungenau, der Fehler wächst exponentiell und die Messmethode für eine Distanzbestimmung unbrauchbar. Der Vorteil ist aber, dass diese Fehler mit den Fehlern eines hier beschriebenen Nah- oder Fernmesssystem nicht korreliert. Ergeben sich im Nah- oder Fernmesssystem durch Abschattung oder Mehrwegeausbreitung, beispielsweise von vorbeigehenden Personen, welche die Messung stören, Sprünge in der Distanzmessung, so scheinen diese Sprünge im Beschleunigungsmesssystem nicht auf.

Ein Beschleunigungssensor kann keine absolute Wegmessung bezogen auf ein Koordinatensystem durchführen, sondern misst nur relative Wegänderungen in einem bestimmten Zeitrahmen. Damit kann keine absolute Distanz zwischen einer Markiereinheit und einer Basisstation ermittelt werden, sondern nur Distanzänderungen in einem Zeitrahmen. Ein Ultraschall- oder Mikrowellenmesssystem führt eine absolute Distanzmessung zwischen dem Objekt und der Basisstation durch. Die relativen Distanzänderungen, gemessen vom Beschleunigungssensor können aber mit den Distanzänderungen eines absolut messenden Systems verglichen werden. Somit werden fehlerhafte Sprünge in der Distanzbestimmung des absolut messenden Systems eliminiert. Die Distanzbestimmung wird dadurch verbessert.

Dabei ist die Zeit, in der ein Messsystem gut funktioniert, stark von der Art oder Technologie des Messsystems abhängig. Dem entsprechend ist die Gewichtung der Messwerte stark von den Eigenschaften der Messsysteme abhängig. Es kann der Kurzzeitmesswert zumindest bei Distanzen unter 1 s des Objekts stärker gewichtet werden als der Langzeitmesswert und der Langzeitmesswert zumindest bei Distanzen über 3 s stärker gewichtet werden als der Kurzzeitmesswert. Dies ist für viele gängige Messsysteme vorteilhaft. Die Zeiten können aber abhängig von der Art der Messsysteme oder den derzeitigen Anforderungen, vorzugsweise durch den Benutzer der Kamera verändert werden.

Das Weitdistanzmesssystem und das weitere Messsystem können jeweils mehrere Sensoren oder Distanzmesseinrichtungen aufweisen. Dabei können die erhobenen Werte verwendet werden, um einander zu korrigieren und so einen gemeinsamen Weitmesswert oder weiteren Messwert auszugeben. Alternativ kann auch vorgesehen sein, dass ein Sensor oder eine Distanzmesseinrichtung zur Korrektur sowohl des Weitmesswerts als auch des weiteren Messwerts herangezogen wird.

Ein Trägheitsnavigationssystem misst in kurzen Zeitabständen sehr genaue Distanzänderung. Der Fehler wächst aber durch die Ungenauigkeit des Sensors über die Zeit exponentiell an. Ein absolutes Distanzmesssystem ist in kurzen Zeitrahmen sehr fehleranfällig und wird sehr genau, wenn über einen langen Zeitrahmen viele Messwerte beispielsweise gemittelt oder durch Filterung gewichtet werden. Das Trägheitsnavigationssystem hat also ein anders Gütekriterium als ein absolutes Distanzmesssystem. Diese beiden Technologien sind voneinander unabhängig. Es kann auch hier eine Übertragungsfunktion zwischen dem Kurzzeitmesssystem und dem Langzeitmesssystem definiert werden.

Besonders vorteilhaft ist, zumindest ein IMU-Messwert zumindest eines Trägheitsnavigationssystems, welches zumindest den Beschleunigungssensor und zumindest einen Drehratensensor umfasst, als weiterer Messwert verwendet wird oder das Trägheitsnavigationssystem mit dem Weitdistanzmesssystem verbunden ist und die Daten des Trägheitsnavigationssystems per Funk versendet. Dieses Trägheitsnavigationssystems, auch IMU (Inertial Measurement Unit) genannt, kann auch weitere Sensoren aufweisen, deren Messwerte miteinander kombiniert werden.

Besonders vorteilhaft ist auch, wenn zumindest ein IMU-Messwert zur Korrektur des Nahmesswertes herangezogen wird.

Von besonderem Vorteil ist, wenn ein weiteres Trägheitsnavigationssystem zusätzlich auch in der Basisstation an der Kamera integriert ist. Werden die Daten vom Trägheitsnavigationssystem der Markiereinheit zur Basisstation übertragen, so können aus den beiden gemeinsamen Beschleunigungen und Orientierungen der Basisstation und der Markiereinheit in einer Recheneinheit auf die relative Bewegung und Bewegungsrichtung der Kamera zum Objekt geschlossen werden. Dies ist vom Vorteil, wenn die Kamera selbst nicht in Ruhe ist, sondern im Raum bewegt wird.

Ultraschall (alternativ auch Laser, Lidar, ...), Mikrowellen-Transponder und IMU sind physikalisch unabhängige Messverfahren. Alle diese Technologien weisen unterschiedliche und unabhängige Messcharakteristik auf. Alle haben für die Anwendung eine bestimmte Messgüte (und dadurch in Summe einen Vorteil) - Ultraschall (Laser, Lidar) ist über 8 m oft ungenau oder fehleranfällig, wenn das Messgerät nicht speziell ausgerichtet wird - Mikrowellen-Transponder sind hingegen unter 4 m schlecht - IMU ist zeitabhängig bei Auswertungszeiträumen von über 1 Sekunde schlecht. Bei allen Technologien treten Probleme bei hohen Geschwindigkeiten über 200 km/h auf.

Trägheitsnavigationssystems oder IMUs (Inertial Measurement Units) verfügen meist neben den Beschleunigungssensoren noch über Drehratensensoren (auch Gyroskope genannt, welche die Drehbewegung des Sensors bestimmen) und Magnetfeldsensoren. Werden Basisstation und Transponder zueinander räumlich eingerichtet, kann die Basisstation immer in gleicher Ausrichtung an der Kamera montiert sein und der Transponder wird in der Position kalibriert (beispielsweise wird beim Einschalten des Transponders dieser parallel zur Basisstation gehalten). So kann das Inertialsystem von Basisstation und Transponder in Bezug auf das Erdmagnetfeld bestimmt werden.

Grundproblem bei der Funkübertragung (und der Messung der Distanz daraus) sind Interferenzen, Abschattungen und Mehrwegausbreitungen. Die Funkübertragung wird durch leitfähige Körper gestört und der Ausbreitungsweg der elektromagnetischen Welle wird verzerrt. Daher "springt" die Entfernungsmessung bei Störungen, auch wenn sie beispielsweise durch Kalman-Filterung stabilisiert wird. Geht beispielsweise eine Person durch die Sichtlinie zwischen Sender und Transponder, so kann es durch die Verlängerung des Ausbreitungsweges zu einem Sprung in der Entfernung kommen. Wird gleichzeitig aber die Beschleunigung (und dadurch die Wegänderung) von Sender und Transponder gemessen, so kann dieser Sprung stabilisiert werden, da der Sprung nie größer sein kann, als die Messwerte der Beschleunigungssensoren. Sind Sender und Transponder in Ruhe (was einer ruhenden Kamera und einem stehenden Objekt entspricht) oder besitzen eine gleichförmige Bewegung, so kann der Sprung überhaupt komplett korrigiert werden. Ist die Geschwindigkeit des Senders und des Transponders quasi konstant, so muss auch keine Beschleunigung gemessen werden. Stillstand und gleichförmige Bewegungen sind ein wichtiger Anwendungsfall.

Aus der Vergangenheit der Bewegung kann geschlossen werden, wie die Beschleunigungsvektoren des Sensors zu den Beschleunigungsvektoren des Objekts stehen. Führt die Entfernungsmessung zu keiner Entfernungsänderung, haben die Beschleunigungsvektoren des Sensors aber Änderungen, so muss die Bewegungsänderung radial zur Basisstation erfolgen. Daraus kann geschlossen werden, wie Basisstation und Transponder zueinander stehen.

Daher ist es auch vorteilhaft, wenn sowohl Basisstation als auch Transponder einen Beschleunigungssensor besitzen. Dem entsprechend kann vorgesehen sein, dass an der Kamera ein weiterer Beschleunigungssensor angebracht wird, der zur Korrektur des Weitmesswertes herangezogen wird. Dieser Wert kann natürlich auch zur Korrektur des Nahmesswerts herangezogen werden. Dies ermöglicht es, auch Situationen Rechnung zu tragen, bei denen die Filmkamera merklich bewegt wird, insbesondere wenn die Filmkamera von einer Bedienungsperson frei getragen wird. Basisstation, die an der Kamera sitzt und Markiereinheit, die am Objekt sitzt, werden durch das Trägheitsnavigationssystem damit in der relativen Position zueinander erfasst. Die Bedingung ist, dass die Daten des Trägheitsnavigationssystems der Markiereinheit zur Basisstation permanent übermittelt werden und in einer Recheneinheit gemeinsam ausgewertet werden. Dabei ist es von Vorteil, wenn das Mikrowellenmesssystem auch gleichzeitig die Daten übertragen kann.

Da die meisten Nahdistanzmesssysteme richtungsgebunden sind, d.h. Objekte nur in bestimmten Richtungen wahrnehmen können, ist es vorteilhaft, wenn das Weitdistanzmesssystem zumindest einen von der Richtung des Objekts zur Kamera abhängigen Richtungswert bereitstellt und zumindest die Ausrichtung des Nahdistanzmesssystems abhängig vom Richtungswert gemacht wird. Wird beispielsweise vom Nahdistanzmesssystem nur in eine bestimmte Richtung oder nur in bestimmte Richtungen Wellen ausgesendet, kann so der Fokus der Aussendung an die Position des Objekts angepasst werden. Insbesondere Richtungs- und Beschleunigungswerte des Weitdistanzmesssystems können dabei von Vorteil sein. Die Ausrichtung kann beispielsweise durch eine motorisierte Führung des Nahdistanzmesssystems erreicht werden. Dem entsprechend kann es auch vorteilhaft ein, wenn das Trägheitsnavigationssystem mit einer Richtungseinstellvorrichtung des Nahdistanzmesssystems verbunden ist. Alternativ können auch vom Weitdistanzmesssystem im Wesentlichen unabhängige Richtungswerte verwendet werden, beispielsweise durch Bilderkennung errechnete oder von eigenständigen Sensoren aufgenommene Werte.

Die Fokussierung der Kamera kann auf verschiedene Arten erfolgen. Die Distanzmesseinheit kann ein Display aufweisen, auf welchem der Distanzparameter angezeigt wird. Der Operator verwendet diese Distanzanzeige als Referenzsignal und steuert den Fokus manuell. Unabhängig davon kann die Distanzmesseinheit eine Schnittstelle zu einem Objektivsteuersystem aufweisen. Der Distanzparameter wird zum Objektivsteuersystem übermittelt. Dort steuert er direkt einen Objektivmotor oder er wird an einem Control-Display angezeigt. Der Operator verwendet diesen Distanzparameter als Referenzsignal und steuert den Fokus manuell. In der Distanzmesseinheit kann aber auch direkt der Objektivmotor angebracht oder angeschlossen werden. In der Distanzmesseinheit werden dabei die gemessenen Distanzparameter in die Fokussierposition für einen Motor umgerechnet. Der Motor fährt diese Positionswerte an und steuert dadurch das Fokusobjektiv an der Kamera. Das System kann damit auch automatisch den Fokus steuern. In allen Fällen ist es in der Distanzmesseinheit dabei möglich, den Offset zwischen Filmsensor-Ebene und Distanzmesseinheit einzugeben, damit die angezeigte Distanz der Abstand zwischen Filmebene und Objekt entspricht.

Die Messwerte können auch für andere Einstellungen der Kamera verwendet werden. Beispielsweise können sie auch zur Steuerung des Zooms verwendet werden. Damit wird erreicht, dass ein Motiv, welches sich zur oder von der Kamera bewegt, immer mit dem gleichen Bildausschnitt gefilmt werden kann. Dabei kann auch der Distanzparameter als geeigneter Wert zur Einstellung verwendet werden, oder ein weiterer Parameter über eine weitere Übertragungsfunktion berechnet werden.

Darüber hinaus ist erfindungsgemäß vorgesehen, dass die Einstelleinheit zur Übermittlung des Weitmesswertes und des weiteren Messwertes mit einer Anzeigeeinrichtung, vorzugsweise einem Bildschirm, zur Darstellung des übermittelten Weitmesswertes und zur Darstellung des übermittelten weiteren Messwertes verbunden ist.

In der Folge wird die Erfindung anhand einer nicht einschränkenden Ausführungsform in den Figuren näher erläutert. Es zeigen:
- Fig. 1: eine Kamera mit einer erfindungsgemäßen Distanzmesseinheit während der Verwendung in einer schematischen Darstellung;
- Fig. 2: eine Übertragungsfunktion der Distanzmesseinheit.

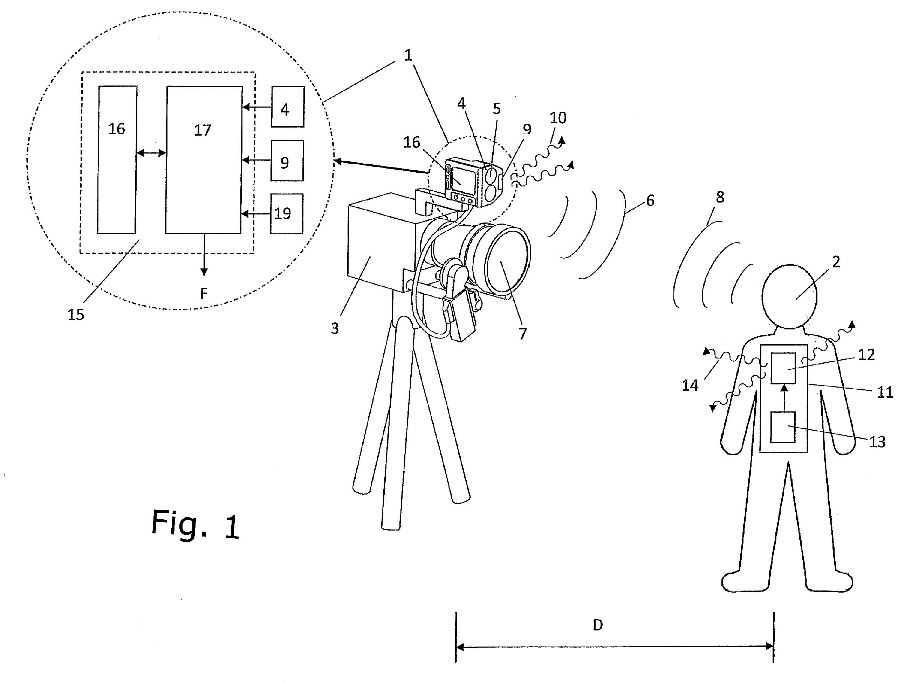

Fig. 1 zeigt eine Person, die das zu fokussierende Objekt 2 darstellt und eine Kamera 3 mit einer auf ihr angeordneten Basisstation 1 einer Distanzmesseinheit. Die Distanzmesseinheit verwendet dabei das erfindungsgemäße Verfahren.

Ein als Nahdistanzmesssystem 4 ausgeführtes weiteres Messsystem weist ein Ultraschallmesssystem 5 auf, welches so ausgerichtet ist, dass es über einen Ultraschallemitter Ultraschallwellen 6 in jene Richtung ausgesendet, in die ein Kameraobjektiv 7 der Kamera 3 gerichtet ist. Diese werden vom Kopfbereich der Person reflektiert und es entstehen entgegengesetzt gerichtete Reflexionswellen 8. Diese werden von einem Ultraschallsensor des Ultraschallmesssystems 5 empfangen und auf Grundlage der Zeitverschiebung zwischen Absenden und Empfangen, Phasenverschiebungen oder anderen detektierbaren Charakteristika kann von einer Kalkulatoreinheit des Ultraschallmesssystems ein als Nahmesswert ausgeführter weiterer Messwert errechnet werden, welcher in etwa der Distanz D zwischen der Kamera und dem Gesicht des Objekts 2 entspricht.

Ein Weitdistanzmesssystem weist ein Mikrowellenmesssystem 9 mit einem Mikrowellenemitter auf, der in der Distanzmesseinheit 1 angeordnet ist. Dieser Mikrowellenemitter sendet ungerichtet Mikrowellensignale 10 aus. An der Brust der Person, unter dessen Kleidung und daher nicht sichtbar, ist eine Markiereinheit 11 der Distanzmesseinheit angeordnet, welche einen Mikrowellenresponder 12 und ein Trägheitsnavigationssystem 13 aufweist. Der Mikrowellenresponder 12 sendet bei Empfangen der Mikrowellensignale 10 Antwortwellen 14 in alle Richtungen aus. Diese können von einer Mikrowellensensoreinheit des Mikrowellenmesssystems 9 in der Distanzmesseinheit 1 empfangen werden und auf Grundlage des Vergleichs zwischen gesendeter und empfangener Mikrowelle ein Weitmesswert berechnet werden, welcher in etwa der Distanz D zwischen der Kamera und dem Objekt 2 entspricht.

Das Mikrowellensignal ist eine sehr breitbandige elektromagnetische Welle, wie ein breitbandiges Radarsignal oder ein UWB-Signal (ultra-wideband).

Das Trägheitsnavigationssystem 13 weist mehrere Sensoren, darunter Beschleunigungssensoren, Gyrosensoren und einen Magnetfeldsensor auf, die die momentane Lage und Bewegung der Markiereinheit 11 bestimmen können.

Die Daten des Trägheitsnavigationssystems 13 werden vom Mikrowellenresponder 12 per Funk an das Mikrowellenmesssystem 9 gesendet, wo sie in der Recheneinheit 17 zur Korrektur der anderen Distanzmesswerte herangezogen werden.

In der Basisstation der Distanzmesseinheit 1 befindet sich ein weiteres Trägheitsnavigationssystem 19, welches ebenfalls mehrere Sensoren aufweist, um die momentane Lage und Bewegung der Kamera 1 bestimmen zu können. Die Daten des Trägheitsnavigationssystems 19 werden ebenfalls der Recheneinheit 17 zugeführt.

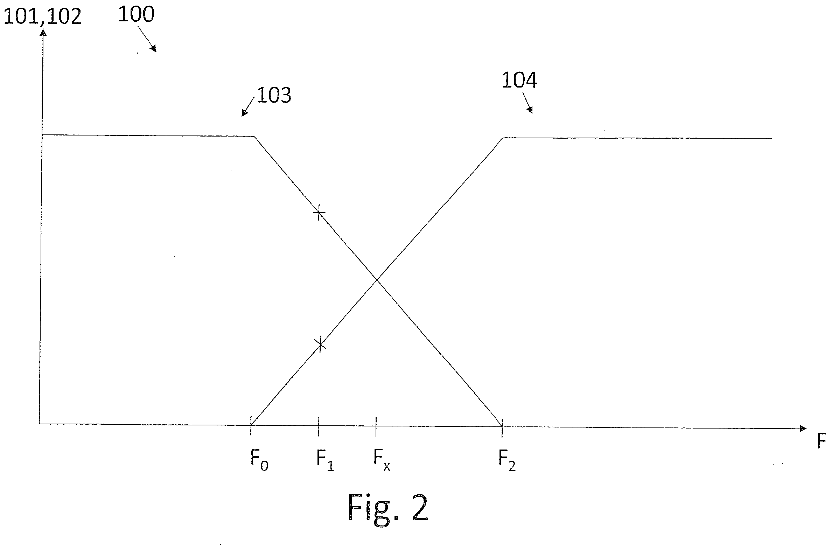

Eine Einstelleinheit 15 erhält vom Weitdistanzmesssystem und vom Nahdistanzmesssystem zumindest den Weitmesswert und den Nahmesswert, vorzugsweise auch die Daten des Trägheitsnavigationssystems 13. Das Trägheitsnavigationssystem kann parallel zum Nahdistanzmesssystem zumindest einen zweiten weiteren Messwert bereitstellen. Eine Recheneinheit 17 der Einstelleinheit 15 berechnet auf Grundlage einer Übertragungsfunktion 100, wie sie in Fig. 2 gezeigt ist, auf Grundlage der Messwerte einen Distanzparameter F, der möglichst genau die Distanz D wiederspiegelt. Diese wird zum Beispiel in Metern oder Zentimetern an einem Display 16 ausgegeben, sodass der Bediener der Kamera 3 den Fokus nach dem Distanzparameter einstellen kann. Die Recheneinheit besitzt auch eine Schnittstelle zu einem Objektivsteuersystem, wobei damit die Distanzparameter ausgegeben werden, oder ein Motor zum Fokussieren des Objektivs direkt angeschlossen sein kann.

Fig. 2 zeigt eine mögliche Übertragungsfunktion 100, welche aus zwei einander überlappenden Kurven 103, 104 besteht. Dabei stellt eine zweite Kurve 104 den Verlauf eines Weitgewichtungsfaktors 102 und eine erste Kurve 103 den Verlauf eines Nahgewichtungsfaktors 101 dar, jeweils in Abhängigkeit des Distanzparameters F. Dabei wird der Distanzparameter F des vorherigen Berechnungszyklus als Stellwert verwendet. Zu jedem Stellwert ergibt sich ein Wert für den Weitgewichtungsfaktor 102 und den Nahgewichtungsfaktor 101. Eine Recheneinheit 17 der Einstelleinheit 15 errechnet die Faktoren 101, 102 aus der Übergabefunktion 100 und multipliziert den Weitgewichtungsfaktor 102 mit dem Weitmesswert und die den Nahgewichtungsfaktor 101 mit dem Nahmesswert. In einem weiteren Schritt werden diese beiden Produkte miteinander addiert, wodurch sich ein neuer Funktionsparameter F als Summe der Produkte ergibt. Steht kein Funktionsparameter F zur Verfügung, beispielsweise weil das System gerade erste eingeschalten wurde, so kann stattdessen die Hälfte der Summe aus Weitmesswert und Nahmesswert verwendet werden.

Die Faktoren 101, 102 können Werte von 0 bis 1 annehmen. Beträgt der Distanzparameter F beispielsweise den Wert F1, so beträgt der Nahgewichtungsfaktor 101 etwa 0,75 und der Weitgewichtungsfaktor 102 etwa 0,25. Bei einem Wert unterhalb von einem ersten Schwellenwert F0, was in dieser Ausführungsform etwa einer Distanz D von 5 m entspricht, hat der Nahgewichtungsfaktor 101 den Wert 1 und Weitgewichtungsfaktor 102 den Wert 0. Damit wird der Weilmesswert nicht in die Berechnung mit einbezogen. Nach dem Schwellenwert F0 steigt der Wert des Weitgewichtungsfaktors 102 linear an, während der Wert des Nahgewichtungsfaktor 101 linear abnimmt, bis zu einem weiteren Schwellenwert F2, an dem der Weitgewichtungsfaktor 102 den Wert 1 annimmt und der Nahgewichtungsfaktor 101 0 beträgt. Schwellenwert F2 stellt dabei eine Distanz von 7 m dar.

Bei 6 m wird ein Schwellenstellwert Fx erreicht, unterhalb dessen der Nahgewichtungsfaktor 101 größer ist als der Weitgewichtungsfaktor 102 und ober dem der Weitgewichtungsfaktor 102 größer ist als der Nahgewichtungsfaktor 101.

Die Kurven 103, 104 sind derart angelegt, dass deren Summe in jedem Fokussierparameer F1 ergeben. In alternativen Ausführungsformen, insbesondere bei anderen Berechnungsarten, kann dies auch anders gewählt werden. Die Verläufe der Kurven 103, 104 zwischen F0 und F1 müssen nicht linear sein, sondern können beispielsweise auch logarithmisch gewählt werden. Die Kurven 103, 104 können unstetig sein, Sprünge enthalten, und müssen nicht streng monoton steigend oder fallend sein.

Es kann vorgesehen sein, dass vom Benutzer die Parameter der Kurven 103, 104 einzeln oder gemeinsam verstellt werden können. Beispielsweise kann vorgesehen sein, dass der Benutzer F0 und F1 verschieben kann, die eine Kurve 103, 104 gegen die andere verschieben kann, oder einen ganz anderen Kurvenverlauf wählen kann. Es kann auch nur ein Umschaltpunkt vorgegeben werden, unterhalb dessen der Wert der zweiten Kurve 103 0 und der der ersten Kurve 104 1 ist, und oberhalb dessen der der Wert der zweiten Kurve 103 1 und der der ersten Kurve 104 0 ist.

Die Recheneinheit 17 erhält neben den Weitmesswert und den Nahmesswert vorzugsweise auch die Daten des Trägheitsnavigationssystems 13 und 19. In der Recheneinheit 17 werden aus den Daten der Trägheitsnavigationssysteme 13 und 19 die relativen Bewegungsänderungen und die Ausrichtung der Kamera 3 und der Markiereinheit 11 zueinander berechnet. Aus den erlaubten Distanzänderungen je Zeiteinheit werden der Weitmesswert und der Nahmesswert korrigiert. Beinhalten der Weit- und Nahmesswert Sprünge in der Distanz, welche vom Trägheitsnavigationssystem nicht festgestellt werden, so werden die möglichen Distanzen aus dem zuletzt gültigen Distanzparameter F und der Bewegungsdaten der Trägheitsnavigationssysteme ermittelt. Daraus wird der neue Distanzparameter F berechnet.

Wie stark diese Korrektur der Bewegungsdaten gewichtet werden soll und in welchem Zeitrahmen die Distanzmessung der Trägheitsnavigationssysteme 13 und 19 auf die Nah- und Weitmesswerte einwirken sollen, kann vom Benutzer an der Einstelleinheit 15 vorgegeben werden.

Die Übertragungsfunktion kann eine weitere Kurve enthalten, wenn die Messwerte des Trägheitsnavigationssystems 13 ebenso als weitere Messwerte Eingang in die Berechnung finden oder es können mehrere Übertragungsfunktionen vorhanden sein. Dabei kann auch ein mehrstufiges Berechnungsverfahren angewendet werden, bei dem beispielsweise zuerst zwei Messwerte miteinander über eine Übertragungsfunktion kombiniert werden, und der Ergebniswert dann über eine zweite Übertragungsfunktion mit dem dritten Messwert kombiniert zu werden. Beispielsweise kann nach der Addition von gewichteten Nahmesswert und Weitmesswert eine Berechnung der sich dadurch ergebende Wert mit dem zweiten weiteren Messwert des Trägheitsnavigationssystems 13 zur Berechnung des Distanzparameters, vorzugsweise über eine Übertragungsfunktion, herangezogen werden.

## Patentansprüche

1. Verfahren für die Distanzmessung zur Fokussierung zumindest eines Kameraobjektivs (7) einer Kamera (3), wobei ein zur Messung größerer Distanzen geeignetes Weitdistanzmesssystem der Distanzmesseinheit die Entfernung des Objektes (2) misst und zumindest einen Weitmesswert bereitstellt und das Weitdistanzmesssystem zumindest ein Mikrowellenmesssystem (9) umfasst und wobei zumindest ein weiteres Messsystem vorgesehen ist, das zumindest ein zur Messung geringer Distanzen geeignetes Nahdistanzmesssystem (4) umfasst und die Distanz (D) des Objektes (2) zur Kamera (3) misst und zumindest einen Nahmesswert als weiteren Messwert bereitstellt, **dadurch gekennzeichnet, dass** der Weitmesswert und der weitere Messwert zur Fokussierung des Kameraobjektivs (7) herangezogen werden und wobei der weitere Messwert und der Weitmesswert dem Benutzer der Kamera angezeigt werden oder wobei aus dem weiteren Messwert und dem Weitmesswert über eine Übertragungsfunktion (100) ein Distanzparameter (F) berechnet wird.

2. Verfahren nach Anspruch 1, **dadurch gekennzeichnet, dass** der weitere Messwert und der Weitmesswert abhängig von der Übertragungsfunktion (100) bei der Berechnung des Distanzparameters (F) unterschiedlich gewichtet werden, wobei vorzugsweise der gewichtete weitere Messwert und der gewichtete Weitmesswert addiert werden.

3. Verfahren nach einem der Ansprüche 1 bis 2, **dadurch gekennzeichnet, dass** der weitere Messwert unterhalb eines Schwellenstellwerts (Fx) der Übertragungsfunktion (100) durch die Übertragungsfunktion (100) stärker gewichtet wird als der Weitmesswert und dass der weitere Messwert oberhalb des Schwellenstellwerts (Fx) durch die Übertragungsfunktion (100) schwächer gewichtet wird als der Weitmesswert.

4. Verfahren nach einem der Ansprüche 1 bis 3, **dadurch gekennzeichnet, dass** das weitere Messsystem zumindest einen Beschleunigungssensor zumindest einer am Objekt (2) angebrachten Markiereinrichtung (11) umfasst und der Beschleunigungssensor zumindest einen Beschleunigungswert bereitstellt und dass der Beschleunigungswert zur Berechnung des weiteren Messwerts herangezogen wird.

5. Verfahren nach Anspruch 4, **dadurch gekennzeichnet, dass** zumindest ein IMU-Messwert zumindest eines Trägheitsnavigationssystems (13), welches zumindest den Beschleunigungssensor und zumindest einen Drehratensensor umfasst, als weiterer Messwert verwendet wird.

6. Verfahren nach einem der Ansprüche 1 bis 5, **dadurch gekennzeichnet, dass** das Nahdistanzmesssystem (4) zumindest ein Ultraschallmesssystem (5), Radar-Messsystem, stereoskope Kameraanordnung, TOF-Kamerasystem, Laser- oder LIDAR-Messsystem umfasst.

7. Verfahren nach Anspruch 6, **dadurch gekennzeichnet, dass** ein Ultraschallemitter des Ultraschallmesssystems (5) im Bereich der Kamera (7) Ultraschallwellen (6) in zumindest eine Richtung aussendet und Reflexionen dieser Ultraschallwellen (6) von einem Ultraschallsensor erfasst werden und dass eine Kalkulatoreinheit einen Nahmesswert des reflektierenden Objektes berechnet.

8. Verfahren nach einem der Ansprüche 1 bis 7, **dadurch gekennzeichnet, dass** das Mikrowellenmesssystem (9) über einen Mikrowellenemitter im Bereich der Kamera (3) Mikrowellensignale (10) aussendet und zumindest ein portabler Mikrowellenresponder (12) zumindest einer am Objekt (2) angebrachten Markiereinrichtung (11) auf die Mikrowellensignale (10) antwortet.

9. Verfahren nach einem der Ansprüche 1 bis 8, **dadurch gekennzeichnet, dass** an der Kamera (7) ein weiterer Beschleunigungssensor angebracht wird, der zur Berechnung des Distanzparameters herangezogen wird.

10. Verfahren nach einem der Ansprüche 1 bis 9, **dadurch gekennzeichnet, dass** das Weitdistanzmesssystem zumindest einen von der Richtung des Objekts (2) zur Kamera (3) abhängigen Richtungswert bereitstellt und zumindest die Ausrichtung des Nahdistanzmesssystems (4) abhängig vom Richtungswert gemacht wird.

11. Distanzmesseinheit zur Messung einer Distanz zwischen einer Kamera (3) und einem Objekt (2) zur Fokussierung zumindest eines Kameraobjektivs (7) einer Kamera (3) auf ein Objekt (2), wobei die Distanzmesseinheit zumindest ein zur Messung größerer Distanzen geeignetes, als Mikrowellenmesssystem ausgeführtes Weitdistanzmesssystem zur Messung zumindest eines Weitmesswertes aufweist, wobei die Distanzmesseinheit zumindest ein weiteres Messsystem zur Messung eines weiteren Messwertes aufweist und eine Einstelleinheit (15) mit dem weiteren Messsystem und mit dem Weitdistanzmesssystem verbunden ist und dass das weitere Messsystem zumindest ein zur Messung geringerer Distanzen geeignetes Nahdistanzmesssystem (4) zur Messung zumindest eines Nahmesswertes als weiteren Messwert aufweist, **dadurch gekennzeichnet, dass** die Einstelleinheit (15) dazu eingerichtet ist, aus dem weiteren Messwert und dem Weitmesswert über eine Übertragungsfunktion (100) einen Distanzparameter (F) zu berechnen oder dass die Einstelleinheit (15) zur Übermittlung des Weitmesswertes und des weiteren Messwertes mit einer Anzeigeeinrichtung, zur Darstellung des übermittelten Weitmesswertes und zur Darstellung des übermittelten weiteren Messwertes verbunden ist und die Anzeigeeinrichtung zur Darstellung des übermittelten Weitmesswertes und zur Darstellung des übermittelten weiteren Messwertes eingerichtet ist.

12. Distanzmesseinheit nach Anspruch 11, **dadurch gekennzeichnet, dass** zumindest eine Markiereinrichtung zur Befestigung am Objekt (2) des weiteren Messsystems zumindest einen Beschleunigungssensor zur Messung zumindest eines Beschleunigungsmesswerts zur Berechnung des weiteren Messwerts aufweist und dass die Markiereinrichtung (11) vorzugsweise zumindest ein Trägheitsnavigationssystem (13) mit zumindest dem Beschleunigungssensor und zumindest einem Drehratensensor aufweist.

13. Distanzmesseinheit nach Anspruch 12, **dadurch gekennzeichnet, dass** das Trägheitsnavigationssystem (13) mit einer Richtungseinstellvorrichtung des Nahdistanzmesssystems verbunden ist.

14. Distanzmesseinheit nach einem der Ansprüche 11 bis 13, **dadurch gekennzeichnet, dass** das Nahdistanzmesssystem (4) ein Ultraschallmesssystem (5), Radarmesssystem, Lasermesssystem, stereoskope Kameraanordnung, TOF-Kamerasystem oder LIDAR-Messsystem aufweist.

15. Distanzmesseinheit nach einem der Ansprüche 11 bis 14, **dadurch gekennzeichnet, dass** das Weitdistanzmesssystem eine portable Markiereinrichtung (11) zur Befestigung am Objekt (2) aufweist, welches vorzugsweise einen Mikrowellenresponder (12) aufweist.

16. Distanzmesseinheit nach einem der Ansprüche 11 bis 15, **dadurch gekennzeichnet, dass** die Distanzmesseinheit eine portable Markiereinrichtung (11) zur Befestigung am Objekt (2) aufweist und dass das weitere Messsystem zumindest einen Beschleunigungssensor aufweist, der der Markiereinrichtung (11) zugeordnet ist.

## Claims

1. Method for measuring distance in order to focus at least one camera lens (7) of a camera (3), wherein a wide-distance measuring system, which is suitable for measuring greater distances, of the distance-measuring unit measures the distance of the object (2) and provides at least one wide-distance measured value, and the wide-distance measuring system comprises at least one microwave measuring system (9) and wherein at least one further measuring system is provided, which comprises at least one short-distance measuring system (4) suitable for measuring short distances and measures the distance (D) of the object (2) to the camera (3) and provides at least one near measured value as a further measured value, **characterised in that** the wide-distance measured value and the further measured value are used for focusing the camera lens (7) and wherein the further measured value and the wide-distance measured value are displayed to the user of the camera or wherein a distance parameter (F) is calculated from the further measured value and the wide-distance measured value via a transfer function (100).

2. Method according to claim 1, **characterised in that** the further measured value and the wide-distance measured value are weighted differently depending on the transfer function (100) when calculating the distance parameter (F), wherein preferably the weighted further measured value and the weighted wide-distance measured value are added.

3. Method according to one of claims 1 to 2, **characterised in that** the further measured value below a threshold setting value (Fx) of the transfer function (100) is weighted more strongly by the transfer function (100) than the wide-distance measured value, and **in that** the further measured value above the threshold setting value (Fx) is weighted less strongly by the transfer function (100) than the wide-distance measured value.

4. Method according to one of claims 1 to 3, **characterised in that** the further measuring system comprises at least one acceleration sensor of at least one marking device (11) attached to the object (2), and the acceleration sensor provides at least one acceleration value, and **in that** the acceleration value is used to calculate the further measured value.

5. Method according to claim 4, **characterised in that** at least one IMU measured value of at least one inertial navigation system (13) comprising at least the acceleration sensor and at least one rotation rate sensor is used as further measured value.

6. Method according to one of claims 5 to 14, **characterised in that** the short-distance measuring system (4) comprises at least an ultrasonic measuring system (5), radar measuring system, stereoscopic camera array, TOF camera, system laser or LIDAR measuring system.

7. Method according to claim 6, **characterised in that** an ultrasonic emitter of the ultrasonic measuring system (5) emits ultrasonic waves (6) in at least one direction in the region of the camera (7) and reflections of these ultrasonic waves (6) are detected by an ultrasonic sensor, and **in that** a calculator unit calculates a short-distance measured value of the reflecting object.

8. Method according to one of claims 1 to 7, **characterised in that** the microwave measuring system (9) emits microwave signals (10) via a microwave emitter in the region of the camera (3) and at least one portable microwave responder (12) of at least one marking device (11) attached to the object (2) responds to the microwave signals (10).

9. Method according to one of claims 1 to 8, **characterised in that** a further acceleration sensor is attached to the camera (7), which is used to calculate the distance parameter.

10. Method according to one of claims 1 to 9, **characterised in that** the wide-distance measuring system provides at least one directional value dependent on the direction of the object (2) to the camera (3) and at least the orientation of the short-distance measuring system (4) is made dependent on the directional value.

11. Distance-measuring unit for measuring a distance between a camera (3) and an object (2) for focusing at least one camera lens (7) of a camera (3) on an object (2), wherein the distance measuring unit has at least one wide-distance measuring system which is suitable for measuring greater distances and is designed as a microwave measuring system for measuring at least one wide-distance measured value, wherein the distance-measuring unit has at least one further measuring system for measuring a further measured value, and an adjustment unit (15) is connected to the further measuring system and to the wide-distance measuring system, and that the further measuring system comprises at least one short-distance measuring system (4), which is suitable for measuring shorter distances, for measuring at least one short-distance measured value as a further measured value, **characterised in that** the adjustment unit (15) is set up to calculate a distance parameter (F) from the further measured value and the wide-distance measured value via a transfer function (100), or **in that** the adjustment unit (15) for transmitting the wide-distance measured value and the further measured value is connected to a display device for displaying the transmitted wide-distance measured value and for displaying the transmitted further measured value, and the display device is set up for displaying the transmitted wide-distance measured value and for displaying the transmitted further measured value.

12. Distance-measuring unit according to claim 11, **characterised in that** at least one marking device for attachment to the object (2) of the further measuring system comprises at least one acceleration sensor for measuring at least one acceleration measured value for calculating the further measured value, and **in that** the marking device (11) comprises at least one inertial navigation system (13) having at least the acceleration sensor and at least one rotation rate sensor.

13. Distance-measuring unit according to claim 12, **characterised in that** the inertial navigation system (13) is connected to a direction setting device of the short-distance measuring system.

14. Distance-measuring unit according to one of claims 11 to 13, **characterised in that** the short-distance measuring system (4) comprises an ultrasonic measuring system (5), radar measuring system, laser measuring system, stereoscopic camera arrangement, TOF camera system or LIDAR measuring system.

15. Distance-measuring unit according to one of claims 11 to 14, **characterised in that** the wide-distance measuring system comprises a portable marking device (11) for attachment to the object (2), which preferably comprises a microwave responder (12).

16. Distance-measuring unit according to one of claims 11 to 15, **characterised in that** the distance-measuring unit comprises a portable marking device (11) for attachment to the object (2), and **in that** the further measuring system comprises at least one acceleration sensor associated with the marking device (11).

## Revendications

1. Procédé de mesure de distance pour la mise au point d'au moins un objectif (7) d'une caméra (3),
- un système de mesure de grande distance approprié pour mesurer des distances relativement grandes de l'unité de mesure de grande distance mesurant la distance de l'objet (2) et fournissant au moins une valeur de distance et le système de mesure de grande distance comprend au moins un système de mesure à microondes (9),
* au moins un autre système de mesure étant prévu qui comprend au moins un système de mesure de distance proche (4) pour une mesure de distance faible et qui mesure la distance (D) de l'objet (2) par rapport à la caméra (3) et fournit au moins une valeur de mesure proche comme autre valeur de mesure,
procédé **caractérisé en ce que**
- la valeur de mesure de grande distance et l'autre valeur de mesure sont utilisées pour la mise au point de l'objectif (7) de la caméra, et
- l'autre valeur de mesure et la mesure grande distance sont affichées à l'utilisateur de la caméra, ou
- l'autre valeur de mesure et la mesure grande distance sont calculées comme paramètre de distance (F) par une fonction de transfert (100).

2. Procédé selon la revendication 1, **caractérisé en ce que**
l'autre valeur de mesure et la mesure grande distance sont pondérées différemment selon la fonction de transfert (100) dans le calcul du paramètre de distance (F),
* de préférence, on additionne l'autre valeur de mesure pondérée et la mesure grande distance pondérée.

3. Procédé selon l'une des revendications 1 et 2,
**caractérisé en ce que**
l'autre valeur de mesure est pondérée plus fortement en dessous d'un seuil (Fx) de la fonction de transfert (100) par la fonction de transfert (100) que la mesure grande distance et l'autre valeur de mesure au-dessus du seuil (Fx) est pondérée moins fortement par la fonction de transfert (100) que la mesure grande distance.

4. Procédé selon l'une des revendications 1 à 3,
**caractérisé en ce que**
l'autre système de mesure comprend au moins un capteur d'accélération pour une installation de marquage (11) appliquée sur l'objet (2) et le capteur d'accélération fournit au moins une valeur d'accélération et cette valeur d'accélération est utilisée pour calculer l'autre valeur de mesure.

5. Procédé selon la revendication 4,
**caractérisé en ce que**
au moins une mesure d'unité de mesure par inertie IMU d'au moins un système de navigation par inertie (13) qui comprend au moins le capteur d'accélération et au moins un capteur de vitesse de rotation est utilisée comme autre valeur de mesure.

6. Procédé selon l'une des revendications 1 à 5,
**caractérisé en ce que**
le système de mesure de distance proche (4) comprend au moins un système de mesure par ultrasons (5), un système de mesure radar, un dispositif de caméra stéréoscopique, un système de caméra TOF, un système de mesure par laser ou lidar.

7. Procédé selon la revendication 6,
**caractérisé en ce que**
un émetteur à ultrasons du système de mesure par ultrasons (5) dans la zone de la caméra (7) émet des ondes d'ultrasons (6) dans au moins une direction et reçoit les ondes à ultrasons (6) réfléchies par un capteur d'ultrasons, et
- une unité de calcul, calcule la mesure proche de l'objet réfléchissant.

8. Procédé selon l'une des revendications 1 à 7,
**caractérisé en ce que**
le système de mesure à microondes (9) émet, par un émetteur de microondes dans la zone de la caméra (3), des signaux microondes (10) et au moins un répondeur de microondes, portatif (12) d'au moins une installation de marquage (11) associée à l'objet (2) répond aux signaux de microondes (10).

9. Procédé selon l'une des revendications 1 à 8,
**caractérisé en ce que**
la caméra (7) est équipée d'un autre capteur d'accélération utilisé pour calculer le paramètre de distance.

10. Procédé selon l'une des revendications 1 à 9,
**caractérisé en ce que**
le système de mesure de grande distance fournit au moins une valeur directionnelle dépendant de la direction de l'objet (2) par rapport à la caméra (3) et l'orientation du système de mesure de distance proche (4) est rendue dépendante de la valeur directionnelle.

11. Unité de mesure de distance pour mesurer la distance entre une caméra (3) et un objet (2) pour la mise au point de l'objectif (7) d'une caméra (3) sur un objet (2),
* l'unité de mesure de distance comprend au moins un système de mesure de grande distance réalisé comme système de mesure à microondes pour mesurer des distances importantes, pour au moins une mesure grande distance,
* l'unité de mesure de distance comportant au moins un autre système de mesure pour mesurer une autre mesure et une unité de réglage (15) reliée à l'autre système de mesure et au système de mesure de grande distance, et
- l'autre système de mesure comprend un système de mesure de distance proche (4) approprié pour au moins mesurer des faibles distances, pour mesurer au moins une valeur de mesure proche comme autre valeur de mesure,
unité **caractérisée en ce que**
l'unité de réglage (15) est conçue pour calculer un paramètre de distance (F) à partir de l'autre valeur de mesure et de la mesure grande distance, par la fonction de transfert (100), ou
l'unité de réglage (15) est conçue pour transmettre la mesure grande distance et l'autre valeur de mesure à une installation d'affichage pour représenter la mesure grande distance transmise et pour représenter l'autre valeur de mesure transmise et l'installation d'affichage est conçue pour représenter la mesure grande distance transmise et pour représenter l'autre valeur de mesure transmise.

12. Unité de mesure de distance selon la revendication 11,
**caractérisée en ce que**
au moins une installation de marquage est prévue pour être fixée à l'objet (2) de l'autre système de mesure avec au moins un capteur d'accélération pour mesurer au moins une valeur d'accélération servant à calculer l'autre valeur de mesure, et
- l'installation de marquage (11) a, de préférence, au moins un système de navigation par inertie (13) avec au moins le capteur d'accélération et au moins un capteur de vitesse de rotation.

13. Unité de mesure de distance selon la revendication 12,
**caractérisée en ce que**
le système de navigation par inertie (13) est relié au dispositif de réglage directionnel du système de mesure de distance proche.

14. Unité de mesure de distance selon l'une des revendications 11 à 13,
**caractérisée en ce que**
le système de mesure de distance proche (4) comprend un système de mesure par ultrasons (5), un système de mesure par radar, un système de mesure par laser, un dispositif de caméra stéréoscopique, un système de caméra TOF ou un système de mesure lidar.

15. Unité de mesure de distance selon l'une des revendications 11 à 14,
**caractérisée en ce que**
le système de mesure de grande distance comprend une installation de marquage portative (11) pour être fixée sur l'objet (2) et qui a de préférence un répondeur microondes (12).

16. Unité de mesure de distance selon l'une des revendications 11 à 15,
**caractérisée en ce que**
l'unité de mesure de distance comprend une installation de marquage (11) portative pour être fixée à l'objet (2), et
- l'autre système de mesure comprend au moins un capteur d'accélération associé à l'installation de marquage (11).
